# EUROPEAN PATENT SPECIFICATION

(11) **EP 0 655 972 B1**
(45) Date of publication and mention of the grant of the patent: **22.03.2000**
(21) Application number: 93915573.5
(22) Date of filing: 04.08.1993
(51) Int. Cl.: B32B 7/02, B32B 27/08, B32B 27/10, B32B 27/12, B65D 65/40, B65D 75/26, B65D 81/26, B65D 85/34

(54) **Method of packaging horticultural produce**
Verfahren zum Verpacken von einem Gartenbauerzeugnis
Procédé d'emballage d'un produit horticole

(30) Priority: 06.08.1992 AU PL398892
(43) Date of publication of application: 07.06.1995
(73) Proprietor: COMMONWEALTH SCIENTIFIC AND INDUSTRIAL RESEARCH ORGANISATION, Campbell, ACT 2612 (AU)
(72) Inventor: PATTERSON, Brian, David, Ourimbah, NSW 2258 (AU); JOYCE, Daryl, Clifford, Chapel Hill, QLD 4069 (AU)
(74) Representative: Plougmann, Vingtoft & Partners A/S
(86) International application number: AU9300398
(87) International publication number: WO9403329

(56) References cited:
- EP-A- 0 356 161
- EP-A- 0 431 504
- EP-A- 0 443 402
- WO-A-92/09426
- WO-A-93/01101
- GB-A- 2 015 925
- GB-A- 2 031 849
- US-A- 4 551 377
- US-A- 4 929 480
- US-A- 4 977 031
- PATENT ABSTRACTS OF JAPAN, C-792, page 46; & JP,A,02 253 847 (DAINIPPON PRINTING CO LTD) 12 October 1990 (12.10.90).
- PATENT ABSTRACTS OF JAPAN, C-827, page 148; & JP,A,03 038 249 (NIPPON SHOKUBAI KAGAKU KOGYO CO LTD) 19 February 1991 (19.02.91).
- DERWENT ABSTRACT Accession No. 90-257076/34, Class P73; & JP,A,02 179 742 (TOYO SEIKAN KAISHA) 12 July 1990 (12.07.90).
- DERWENT ABSTRACTS Accession No. 93-107339/13, Class P73; & JP,B,05 015 546 (TOPPAN PRINTING CO LTD) 1 March 1993 (01.03.93).
- PATENT ABSTRACTS OF JAPAN, C-1005, page 104; & JP,A,04 209 899 (TOPPAN PRINTING CO LTD) 31 July 1992 (31.07.92).

## Description

The present invention relates to a packaging material and to a method of packaging horticultural produce. The packaging material and method of packing of the present invention enable the cooling of living horticultural produce within the packaging material with a greater than 90% reduction over current methods in the condensation of water on the packed produce.

When horticultural produce is harvested it begins to deteriorate. The process of deterioration can be retarded by cooling the produce as soon as possible after harvest. Products that are relatively resistant to cold are cooled to temperatures as close as practicable to their freezing point, while many tropical fruits, vegetables and flowers are cooled to temperatures of 15°C or less. During subsequent storage and transport to distant markets, the produce is preferably maintained at a temperature as low as possible, consistent with the resistance to cold of the particular produce.

In current practice, a number of different techniques of cooling and methods of packaging are used. Whatever methods are used, their sequence is relevant to the invention described here.

In the first procedure, the produce, which may be a fruit, vegetable, harvested ornamental or a plant still attached to its roots, is cooled before being packaged to a temperature that approaches the optimum temperature for storage. For many products, this will be a temperature close to 0°C. The produce is then packaged in a way that protects the produce during subsequent storage and transport.

In the second procedure, the reverse sequence is used, with the produce being packaged before being cooled.

Whether one or the other sequence is used depends on the nature of the crop, the length of storage desired and the facilities available. If condensation is likely to harm the commodity, the first sequence is to be preferred. However, a number of considerations often make it difficult or impossible to achieve in current practice. These considerations are detailed below.
1. If the produce is cooled before packing, it will tend to warm during packing. To prevent this, the packing operation should be performed at the temperature of storage. However, packers must be paid higher rates to work at such low temperatures and in any case the provision of controlled temperatures in a packing area is expensive.
2. If the produce is destined for extended storage, dehydration must be prevented by using packaging that is a barrier to the loss of water. This will result in relative humidities around the produce of 98% or greater. Under these circumstances, water will condense in the package if the produce has warmed during packing. This condensation damages many commodities and encourages diseases such as rots that destroy the commodity.
3. Because packers are reluctant to work at low temperature or because facilities are too expensive to install, much precooled produce is packed at temperatures higher than the storage temperature.

Under such conditions, moisture condenses on the fruit. This can damage the commodity in many ways and shorten its post-harvest life.

Because of the considerations outlined above, the second sequence, of packing before cooling, is often adopted. This is in general simpler and less expensive, but introduces a number of other problems, as outlined below.
1. If a warm commodity is cooled within a package, the package generally has a smaller heat capacity than the horticultural commodity. During the cooling process, the commodity will generally be at a higher temperature than the package. Under such circumstances, moisture will evaporate from the commodity to the packaging. If this moisture is not dissipated, the commodity will be harmed. In order to dissipate the moisture, the package must have holes that allow bulk exchange of air during cooling.
2. During extended storage or transport of horticultural produce, the packaging must be such as to prevent excessive loss of moisture. However, for the reasons outlined above, packaging in which produce is cooled must allow free loss of moisture. As a result, cooling within the package, although often to be preferred on grounds of economy, is not suitable for commodities that must be stored for extended periods without loss of moisture.

In summary, the current practices of handling that concern the cooling and packaging of horticultural produce involve several compromises. The need to cool the produce efficiently must be reconciled with the need for a package appropriate to the conditions of storage. At the same time, the economic restraints set by the conditions of work for the packers and the expense of providing refrigerated packing areas must be considered. When these factors are considered together, an overall conclusion concerning current practice is arrived at. This is, that packing before cooling is to be preferred over cooling before packing, but technical innovation is needed to overcome the problem of condensation. Otherwise, the package is not likely to prevent the loss of water during extended storage.

The present invention consists in a method of packaging horticultural produce comprising packing the produce in a packaging material comprising a first sheet which is impermeable to water vapour and liquid water, a second sheet which is permeable to water vapour, and a film positioned between the first and second sheets, the film being capable of absorbing at least 10% of its weight of water from liquid water after being equilibrated with an atmosphere saturated with water vapour, wherein the second sheet is facing the horticultural produce.

In a first preferred embodiment the film comprises a layer of fibrous hydrophilic material such as paper made from cellulose fibres or other hydrophilic fibres. This layer may be bonded to the first sheet, or it may be free.

In a second preferred embodiment of the present invention the film comprises a polymer of polyvinyl alcohol which is able to absorb water from the vapour or liquid phase to form a water-swellable gel.

In a further preferred form of the present invention the polyvinyl alcohol polymer is soluble in water above 80°C and insoluble in water below 40°C. It is further preferred that the polymer is free of low molecular weight compounds that exude from the polymer and form an aqueous solution when the polymer is equilibrated with atmospheres saturated with water vapour.

The first sheet may be composed of any number of materials which are impervious to liquid water and water vapour. At present, however, it is preferred that the first sheet comprises a film of polyethylene, polypropylene or a layer of wax.

The second sheet prevents the film from sticking to the horticultural commodity.

The second sheet can be composed of a number of hydrophobic or hydrophilic polymers such as the polyenes, polyvinyl chloride and fluorinated polymers. The physical state of the polymer should be such that it is freely or partly permeable to water vapour. In a preferred embodiment of the second sheet, it is composed of a hydrophobic polymer, such that while it is freely permeable to water vapour, it offers some resistance to the passage of liquid water. Materials that meet these specifications includes the non-woven fabrics made of polyethylene, such as "TYVEK" made by Dupont, non-woven fabrics of polypropylene such as "EVOLUTION" made by Kimberley Clark, or perforated films of these polymers, or papers or woven fabrics made from cotton or similar fibres, that have been treated to render their surface hydrophobic.

In yet a further preferred form of the present invention the packaging material further includes, an outer layer, the first sheet and the film being positioned between the outer layer and the second sheet. The function of the outer layer is to provide mechanical strength to the packaging material and may be composed of a number of such materials well known in the field and will typically be a corrugated paper carton.

In a preferred form of the present invention following the packing of the horticultural produce the packaged material is cooled to the required storage temperature.

In order that the nature of the present invention may be more clearly understood preferred forms thereof will now be described with reference to the following examples and figures in which:-
Fig. 1 shows the water uptake and loss characteristics of the polyvinyl alcohol film at different relative humidities ( ■ drying; □ wetting) (Y-axis: grams of water per 100 grams dry polyvinyl alcohol);
Fig. 2 shows water uptake of the film which has been equilibrated at 100% relative humidity when placed in contact with liquid water ( 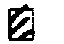 water as vapour; ■ water as liquid).
Figs. 3 shows a schematic representation of a prior art form of packing.
Figs. 4, 5 and 6 show schematic representations of preferred forms of the invention; and
Fig. 7 shows rate of water loss at 25°C from discs of absorbent paper (Whatman Number 1 filter paper) ( 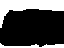 ) and polyvinyl alcohol film ( 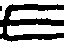 ).

### Preparation of a Polyvinyl Alcohol Film

Commercial film of polyvinyl alcohol was used that is insoluble in cold water but soluble in water above 80°C (Poval Type L, made by Kuraray). The thickness was about 50 microns. The film was washed by immersion and agitation in three changes of water at 20°C. The washing removed a compound of low molecular weight that had a high affinity for water and which "bled" from the original film at humidities above 80%. The washed film was dried at room temperature. This washed film remained free of liquid even when equilibrated to 100% relative humidity.

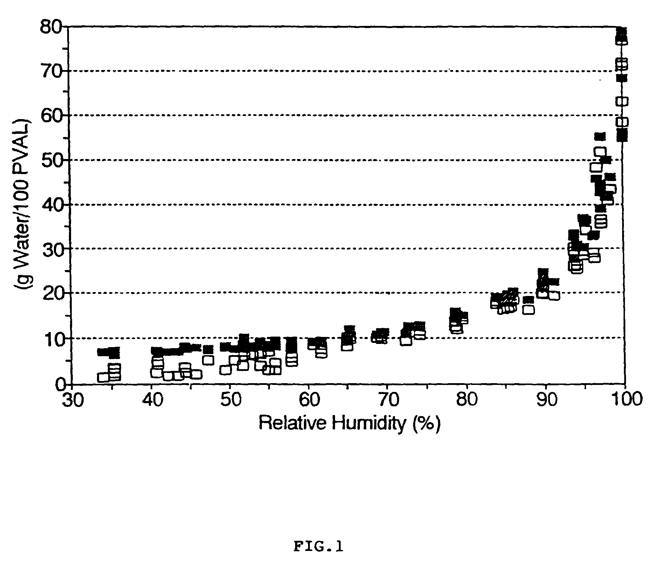

The water uptake and loss characteristics of the film at different relative humidities are shown in Figure 1.

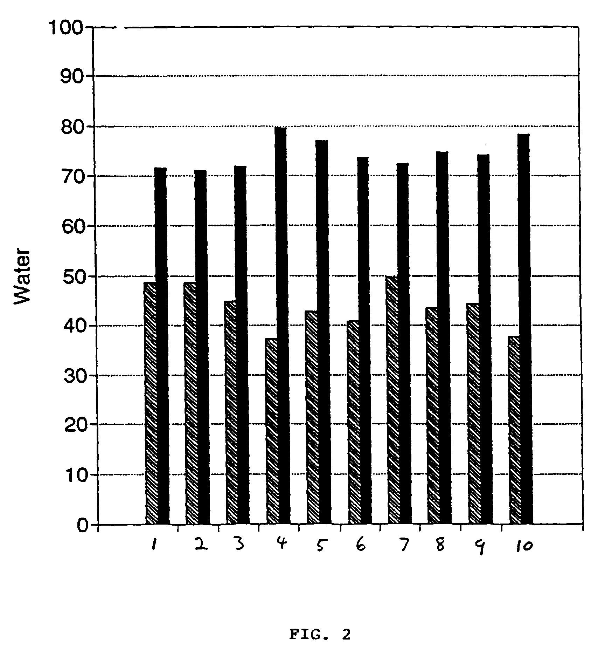

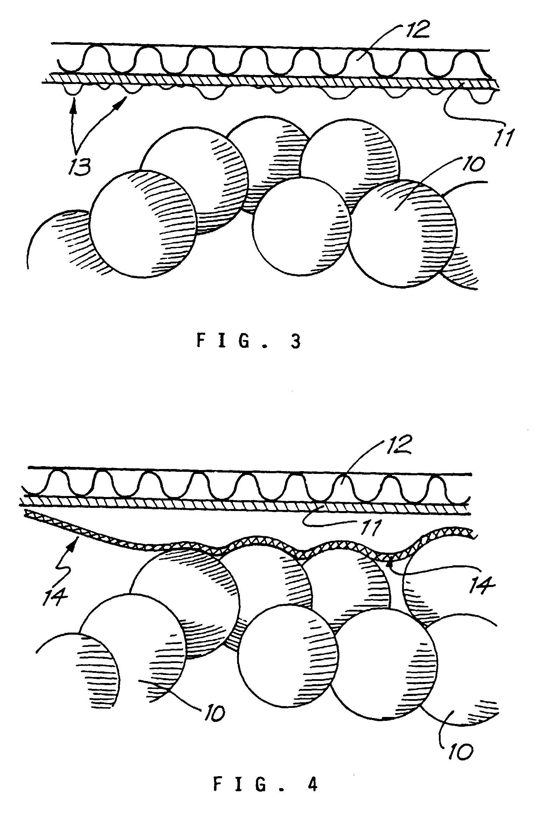

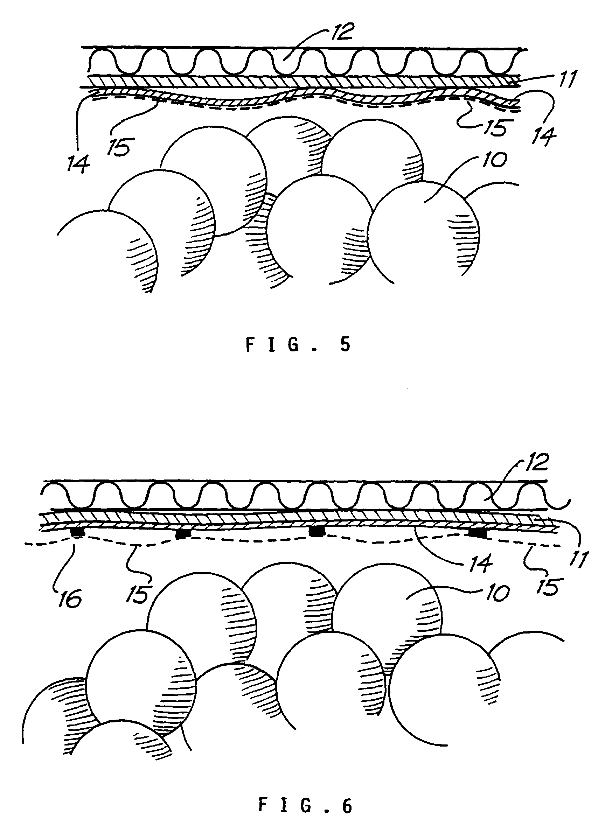

The water uptake of the film, which has been equilibrated at 100% relative humidity when contacted by liquid water are shown for several samples in Figure 2.

The results show that, even after taking up water vapour from air at 100% relative humidity, the film is able to absorb significantly more water from the liquid phase into the gel phase of the film.

These characteristics contrast with the unwashed film, which deliquesces ("bleeds") when placed in air at high relative humidity. As is well known, absorbent papers can also take up additional water from the liquid phase after being equilibrated at 100% relative humidity. In this case much of the water is taken up by capillary spaces rather than as gel phase water. Whether a film of polyvinyl alcohol or similar gel-like material is to be preferred over a paper-like material in the present invention is influenced by this difference in behaviour.

When warm horticultural produce is placed within a barrier to water vapour the air around the horticultural produce approaches a relative humidity that is in equilibrium with the horticultural produce. For most fresh produce, this will be about or above 98% relative humidity. When such a package is cooled, the vapour barrier will cool more quickly than will the bulk of the produce. Whenever the temperature of the water vapour falls below the dew point for the prevailing humidity, water will condense on the vapour barrier. This is the situation shown in Figure 3.

The use of the packing material of the present invention which includes a water absorbing film which can act as a reservoir of water and so control condensation under fluctuating temperatures is to be contrasted with the use of sachets or local concentrations of gel particles in the packaging of horticultural produce. The distribution of water vapour within a package of horticultural produce in which there are gradients of temperature is limited by the rate of diffusion of water vapour. The diffusion limitation results from the relatively small differences of partial pressure for water vapour for a given difference in relative humidity. Accordingly, due to this diffusion limitation it is highly desirable that the water-absorbing material is as close as possible to the horticultural produce. This is very difficult to achieve with sachets of desiccants or humidity buffers which have a local influence only and fail to control humidity and condensation in more distant parts of the package. In contrast, in the present invention all areas of the package are close to the water absorbing film. Indeed, in a preferred embodiment of the second aspect of the present invention, if the package is bulky, a sandwich comprising a film, which is capable of absorbing at least 10% of its weight of water from liquid water after being equilibrated with an atmosphere saturated with water vapour, between two sheets which are permeable to water vapour is provided between each, or some of the layers of horticultural produce.

As will be readily apparent to those skilled in this field the packing material and method of the present invention provide clearly superior property over that of the prior art in which localised desiccants and humidity buffers are used.

In Figure 3 the produce is designated 10, the water vapour/liquid water barrier is designated 11 and an outer rigid packing material is shown as 12. As can be seen in this drawing condensation droplets 13 form on the water vapour/liquid water impermeable layer 11.

As shown in Figure 4 when a water absorbing film 14 is included in the packaging material condensation is prevented from accumulating. Water vapour given off by the warm produce is absorbed into the film 14 and does not accumulate.

Figure 5 shows a further preferred form of the present invention in which the packaging material further includes sheet 15 which is permeable to water vapour. The inclusion of sheet 15 prevents the film 14 from sticking to the produce. This tends to be a problem when the film is fully hydrated and is prevented by the inclusion of sheet 15. In the embodiment shown even if the amount of water that is absorbed by film exceeds its capacity, sheet 15 prevents the passage of liquid water to the produce.

Figure 6 shows a further preferred form of the present invention in which the film 14 adheres closely to the vapour/liquid water barrier 11. In this example the vapour/liquid water barrier may be polyethylene which has been extended on to or laminated to the film 14 which may be an absorbent paper or other fibrous hydrophilic material. In the case illustrated in Fig. 6 the sheet 15 may be point bonded 16 to the paper 14, such that the bonded area does not exceed 5% of the total area.

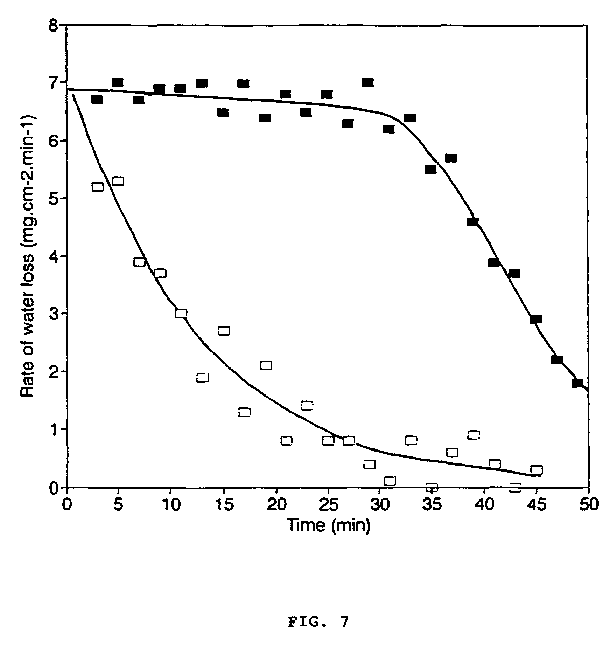

In the examples illustrated by Fig. 5 and Fig. 6, the condensation which is sequestered in film 14 is able to evaporate and return to the horticultural produce through the vapour phase. The ease with which this occurs for two possible formulations of film 14 is shown in Fig. 7. If film 14 is polyvinyl alcohol, there is a rapid fall with time of the rate at which the stored water can evaporate. This may be advantageous if the package is subject to large fluctuations in temperature. Alternatively, Fig. 7 shows that if the water is stored in a paper, uniformly rapid evaporation is possible over a more extended period. This may be advantageous when it is desired to allow as much as possible of the condensed water to return to the horticultural produce.

The rate of loss of water at 25°C was followed under conditions of constant water deficit from discs of absorbent paper (Whatman Number 1 filter paper) or polyvinyl alcohol film (Kuraray Poval Type L, washed) after saturating with water and blotting to remove surface moisture. The nearly constant rate for paper of the first 30 minutes reflects the loss of capillary-held water. In contrast, all the water in the polyvinyl alcohol film was held in the gel phase. As a consequence, most of the water was lost at a lower rate from this material.

The performance of the condensation control made with paper as the water storing agent (film 14 in Fig. 6) and incorporated into a box, is shown in Table 1. Boxes were made whose internal dimensions were height, 15.5cm; width, 29.5cm; length, 46.0cm. The water barrier 11 was polyethylene of thickness 12 micrometres bonded to an absorbent paper (14) of weight 50 grams per square metre. The layer 15 was composed of Evolution fabric made by Kimberley Clark Ltd, of weight 16 grams per square metre. This was point bonded to the paper with small pieces of double-sided sticky tape. These boxes were compared with ones in which the polyethylene liner 11 only was present. They were then loaded with carrots (6kg) that had been previously brought either to 22°C or 10°C. All the boxes were closed and placed in a coolroom at 3°C for 3 days. The quantity of free moisture which could be blotted with tissue paper from the insides of the boxes and from the carrots was then determined. Table 1 shows that the condensation control box was completely successful in eliminating free moisture with the lesser degree of cooling, and more than 95% successful in reducing free water accumulation with the greater amount of cooling.

**TABLE 1**

| Condensation as free water recovered from box (ml) | | | | |
|---|---|---|---|---|
| | Cooled from 10C to 3C | | Cooled from 22C to 3C | |
| Expt | Polyethylene Liner | Condensation Control | Polyethylene Liner | Condensation Control |
| 1 | 9.9 | 0.0 | 23.4 | 0.1 |
| 2 | 10.7 | 0.0 | 22.3 | 0.1 |
| 3 | 10.0 | 0.0 | 22.3 | 0.0 |
| 4 | 10.6 | 0.0 | 25.1 | 0.1 |
| 5 | 9.3 | 0.0 | 21.4 | 0.9 |

## Claims

1. A method of packaging horticultural produce comprising packing the produce in a packaging material comprising;
(i) a first sheet which is impermeable to water vapour and liquid water,
(ii) a second sheet which is permeable to water vapour, and
(iii) a film positioned between the first and second sheets, which is capable of absorbing at least 10% of its weight of water from liquid water after being equilibrated with an atmosphere saturated with water vapour,
wherein the second sheet is facing the horticultural produce.

2. A method as claimed in claim 1 in which the film comprises a layer of fibrous hydrophilic material.

3. A method as claimed in claim 2 in which the film is paper made from cellulose fibres or other hydrophilic fibres.

4. A method as claimed in claim 1 in which the film comprises a polymer of polyvinyl alcohol and is able to absorb about 40 grams water per 100 grams dry film from the vapour phase when in contact with air at 100% relative humidity, and about 70 grams per 100 grams dry film when in contact with water in the liquid phase.

5. A method as claimed in claim 4 in which the polyvinyl alcohol polymer is soluble in water above 80°C and insoluble in water below 40°C.

6. A method as claimed in claim 4 or claim 5 in which the polyvinyl alcohol polymer is free of low molecular weight compounds.

7. A method as claimed in any one of claims 1 to 6 in which the film is bonded to the first sheet.

8. A method as claimed in claim 7 in which the bonded area is less than 5% of the total area of the film.

9. A method as claimed in any one of claims 1 to 8 in which the first sheet comprises a film of polyethylene, polypropylene or a layer of wax.

10. A method as claimed in any one of the preceding claims in which the second sheet is composed of a hydrophobic polymer such that while it is freely permeable to water vapour it offers resistance to the passage of liquid water.

## Patentansprüche

1. Verfahren zum Verpacken von Gartenbauerzeugnissen, das das Verpacken des Erzeugnisses in einem Verpackungsmaterial umfaßt, das aufweist:
(i) eine erste Bahn, die für Wasserdampf und flüssiges Wasser undurchlässig ist,
(ii) eine zweite Bahn, die wasserdampfdurchlässig ist, und
(iii) einen zwischen der ersten und der zweiten Bahn angeordneten Film, der in der Lage ist, wenigstens 10% seines Gewichts Wasser aus flüssigem Wasser zu absorbieren, nachdem er mit einer wasserdampfgesättigten Atmosphäre ins Gleichgewicht gesetzt wurde,
wobei die zweite Bahn dem Gartenbauerzeugnis zugewandt ist.

2. Verfahren nach Anspruch 1, bei dem der Film eine Schicht aus einem faserigen hydrophilen Material aufweist.

3. Verfahren nach Anspruch 2, bei dem der Film ein Papier ist, das aus Cellulosefasern oder anderen hydrophilen Fasern hergestellt ist.

4. Verfahren nach Anspruch 1, bei dem der Film ein Polyvinylalkoholpolymer aufweist und in der Lage ist, etwa 40 g Wasser pro 100 g trockener Film aus der Dampfphase zu absorbieren, wenn er mit Luft mit einer 100%-igen relativen Luftfeuchtigkeit in Kontakt ist, sowie etwa 70 g pro 100 g trockener Film, wenn er mit Wasser in der flüssigen Phase in Kontakt ist.

5. Verfahren nach Anspruch 4, bei dem das Polyvinylalkoholpolymer in Wasser oberhalb von 80°C löslich ist und in Wasser unterhalb 40°C unlöslich ist.

6. Verfahren nach Anspruch 4 oder 5, bei dem das Polyvinylalkoholpolymer frei von Verbindungen mit niedrigem Molekulargewicht ist.

7. Verfahren nach irgendeinem der Ansprüche 1 bis 6, bei dem der Film an die erste Bahn gebunden ist.

8. Verfahren nach Anspruch 7, bei dem die gebundene Fläche weniger als 5% der Gesamtfläche des Films beträgt.

9. Verfahren nach irgendeinem der Ansprüche 1 bis 8, bei dem die erste Bahn einen Film aus Polyethylen, Polypropylen oder eine Wachsschicht umfaßt.

10. Verfahren nach irgendeinem der vorausgehenden Ansprüche, bei dem die zweite Bahn aus einem hydrophoben Polymer zusammengesetzt ist, so daß sie, während sie für Wasserdampf frei durchlässig ist, dem Durchtritt von flüssigem Wasser einen Widerstand entgegensetzt.

## Revendications

1. Procédé d'emballage d'un produit horticole comprenant une étape d'emballage du produit dans un matériau d'emballage comportant :
(i) une première feuille qui est imperméable à la vapeur d'eau et à l'eau liquide,
(ii) une seconde feuille qui est perméable à la vapeur d'eau, et
(iii) un film positionné entre les première et seconde feuilles, qui est apte à absorber au moins 10 % de son poids d'eau issu d'eau liquide après avoir été équilibré avec une atmosphère saturée de vapeur d'eau,
dans lequel la seconde feuille est disposée en regard du produit horticole.

2. Procédé selon la revendication 1, dans lequel le film comprend une couche d'un matériau hydrophile fibreux.

3. Procédé selon la revendication 2, dans lequel le film est constitué de papier fabriqué à partir de fibres cellulosiques ou autres fibres hydrophiles.

4. Procédé selon la revendication 1, dans lequel le film comprend un polymère d'alcool polyvinylique et est apte à absorber environ 40 g d'eau par 100 g de film sec à partir de la phase vapeur lorsqu'en contact avec l'air à une humidité relative de 100% et environ 70 g par 100 g de film sec lorsque en contact avec de l'eau en phase liquide.

5. Procédé selon la revendication 4, dans lequel le polymère d'alcool polyvinylique est soluble dans l'eau à température au-dessus de 80 °C et insoluble dans l'eau à température au-dessous de 40 °C.

6. Procédé selon la revendication 4 ou la revendication 5, dans lequel le polymère d'alcool polyvinylique est dépourvu de composés à faible poids moléculaire.

7. Procédé selon l'une quelconque des revendications 1 à 6, dans lequel le film est collé à la première feuille.

8. Procédé selon la revendication 7, dans lequel la surface collée est inférieure à 5 % de la surface totale du film.

9. Procédé selon l'une quelconque des revendications 1 à 8, dans lequel la première feuille comprend un film de polyéthylène, de polypropylène ou une couche de cire.

10. Procédé selon l'une quelconque des revendications précédentes, dans lequel la seconde feuille est constituée d'un polymère hydrophobe de manière telle qu'alors qu'il est grandement perméable à la vapeur d'eau, il offre une résistance au passage de l'eau liquide.
